# EUROPEAN PATENT APPLICATION

(11) **EP 4 506 160 A1**
(43) Date of publication of application: **12.02.2025**
(21) Application number: 23795190.0
(22) Date of filing: 20.04.2023
(51) Int. Cl.: B32B 15/01, C22C 21/00, F28F 19/06

(54) **HEAT EXCHANGE TUBE FOR HEAT EXCHANGER, AND HEAT EXCHANGER**

(30) Priority: 27.04.2022 CN 202210459572
(71) Applicant: Sanhua (Hangzhou) Micro Channel Heat Exchanger Co. Ltd, Zhejiang 310018 (CN)
(72) Inventor: WANG, Chuanting, Hangzhou Economic& Technological Development Area Hangzhou, Zhejiang 310018 (CN); LIU, Yuzhang, Hangzhou Economic& Technological Development Area Hangzhou, Zhejiang 310018 (CN); ZUO, Yuke, Hangzhou Economic& Technological Development Area Hangzhou, Zhejiang 310018 (CN); ZHOU, Han, Hangzhou Economic& Technological Development Area Hangzhou, Zhejiang 310018 (CN)
(74) Representative: Hautier IP - MC/EP
(86) International application number: PCT/CN2023/089572
(87) International publication number: WO 2023/207757

(57) **Abstract**

A heat exchange tube for heat exchanger, and a heat exchanger provided. The heat exchange tube includes a core layer, a first layer, and a second layer. A material of the core layer is industrial pure aluminum or aluminum alloy. A material of the first layer and a material of the second layer are aluminum alloy. The core layer includes a first side and a second side in a thickness direction thereof, the first layer and the second layer are arranged outside the first side. A thickness direction of the first layer, a thickness direction of the second layer, and a thickness direction of the core layer are substantially parallel to each other. The first layer and the second layer are arranged at the same side of the core layer, and the second layer is closer to the core layer than the first layer. A corrosion potential of the first layer is less than a corrosion potential of the second layer, and the corrosion potential of the second layer is less than a corrosion potential of the core layer.

## Description

### CROSS-REFERENCE OF RELATED APPLICATIONS

The present application claims the benefit of priority to Chinese Patent Application No. 202210459572.0, filed on April 27, 2022, which is hereby incorporated by reference in its entirety.

### TECHNICAL FIELD

The disclosure relates to the technical field of heat exchange and, in particular, to a heat exchange tube for heat exchanger, and a heat exchanger.

### BACKGROUND

At present, microchannel heat exchanger is widely applied in various air conditioning fields. In the related art, the microchannel heat exchanger includes a plurality of heat exchange tubes, a material of which is aluminum alloy. In the application of heat exchange of the heat exchanger with air, corrosion resistance of the heat exchange tube in the air influences heat exchange performance and service life of the heat exchanger. Therefore, a zinc layer is coated on outer side of core material of the heat exchange tube. However, the coated zinc layer may have uneven thicknesses, thereby affecting the corrosion resistance of the heat exchange tube in usage, so that the heat exchange tube is prone to local corrosion to leak refrigerant, affecting the heat exchange performance and the service life of the heat exchanger.

### SUMMARY

In view of this, an aspect of the present disclosure provides a heat exchange tube for heat exchanger, the corrosion resistance of which is beneficially improved. The heat exchange tube is applied to a heat exchanger, which is beneficial to improve heat exchange performance of the heat exchanger and prolong service life of the heat exchanger.

Another aspect of the present disclosure provides a heat exchanger.

In an embodiment of the first aspect of the present disclosure, a heat exchange tube for heat exchanger is provided. The heat exchange tube includes a core layer, a first layer, and a second layer. A material of the core layer is industrial pure aluminum or aluminum alloy. A material of the first layer and a material of the second layer are aluminum alloy. The core layer includes a first side and a second side in a thickness direction thereof, the first layer and the second layer are arranged outside the first side. A thickness direction of the first layer, a thickness direction of the second layer, and a thickness direction of the core layer are substantially parallel to each other. The first layer and the second layer are arranged at the same side of the core layer, and the second layer is closer to the core layer than the first layer. A corrosion potential of the first layer is less than a corrosion potential of the second layer, and the corrosion potential of the second layer is less than a corrosion potential of the core layer.

In some embodiments, the heat exchange tube further includes a third layer. One or two or more layers of the first layer, the second layer, and the third layer are arranged outside the second side of the core layer. When there are two or more layers arranged outside the second side, the layer away from the core layer in the thickness direction has a lower corrosion potential than the layer close to the core layer in the thickness direction.

In some embodiments, the core layer includes, by mass percentage, Si: 0%-0.3%, Fe: 0%-0.3%, Cu: 0.15%-1.0%, Mn: 0.5%-2.0%, Mg: 0%-0.5%, and one of 0%-0.3% Zr and 0%-0.25% Ti, and a remainder of Al and inevitable impurity elements.

In some embodiments, the second layer includes, by mass percentage, Si: 0%-0.3%, Fe: 0%-0.3%, Cu: 0%-0.1%, Mn: 0.5%-2.0%, Zn: 0%-1.0%, Ti: 0%-0.25%, and Zr: 0%-0.3%, and a remainder of Al and inevitable impurity elements.

In some embodiments, Si in the second layer accounts for, by mass percentage, less than 0.1%.

In some embodiments, the first layer includes, by mass percentage, Si: 0%-0.8%, Fe: 0%-0.6%, Cu: 0%-0.1%, Mn: 0%-2.0%, Zn: 0.5%-3.0%, Ti: 0%-0.25%, and Zr: 0%-0.3%, and a remainder of Al and inevitable impurity elements.

In some embodiments, the third layer includes, by mass percentage: Si: 2%-14%, Fe: 0%-0.3%, Cu: less than 0.1%, Mn: less than 0.3%, Zn: 0%-3.0%, and Ti: 0%-0.2%, and a remainder of Al and inevitable impurity elements.

In some embodiments, the heat exchange tube has at least one of the following features A, B and C:

A. a thickness of the third layer accounts for 5%-20% of material thickness of the heat exchange tube,

B. a thickness of the first layer accounts for 5%-30% of material thickness of the heat exchange tube, and

C. a thickness of the second layer accounts for 5%-50% of material thickness of the heat exchange tube.

In some embodiments, the heat exchange tube is a microchannel flat tube. The microchannel flat tube includes a plurality of heat exchange channels and a plurality of first pieces. The plurality of heat exchange channels are arranged at intervals in width direction of the microchannel flat tube and extend in length direction of the microchannel flat tube. Each of the first pieces is arranged between two adjacent heat exchange channels in width direction of the microchannel flat tube. The heat exchange tube has a width W and a channel quantity N, which satisfy: 0.1<((N-2)/20)² ((W-16)/16)³ <0.25.

In an embodiment of the second aspect of the present disclosure, a heat exchanger is provided. The heat exchanger includes a first tube, a second tube, multiple heat exchange tubes for heat exchanger according to any one of the foregoing embodiments, and a fin. One ends of the heat exchange tubes are directly or indirectly connected with the first tube, the other ends of the heat exchange tubes are directly or indirectly connected with the second tube. The fin is arranged between two adjacent heat exchange tubes in length direction of the first tube, and connected with the two adjacent heat exchange tubes.

The heat exchanger of the embodiments of the present disclosure has the following beneficial effects. Due to the application of the foregoing heat exchange tube, service life of the heat exchanger is prolonged, and heat exchange performance of the heat exchanger is improved.

In the heat exchange tube for heat exchanger of the embodiments of the present disclosure, by arranging the first layer and the second layer outside the core layer, and by designing and adjusting corrosion potential gradient from the outer layer to the inner layer, an aluminum alloy tube with excellent corrosion performance can be obtained. The low corrosion potential layer of outer layer is preferentially corroded to protect the core layer material to slow down corrosion, and tube materials of the heat exchange tube forms graduated protection, so as to improve corrosion resistance of the heat exchange tube, and prolong service life of the heat exchanger.

The heat exchanger of the embodiments of the disclosure applies the heat exchange tube of the embodiments of the disclosure, which is beneficial to prolong service life of the heat exchanger, and improve heat exchange performance of the heat exchanger.

### BRIEF DESCRIPTION OF DRAWINGS

The above and/or additional aspects and advantages of the present disclosure will become apparent and readily understood from the following description of embodiments in conjunction with the accompanying drawings.
FIG. 1 is a schematic structural diagram of a heat exchange tube according to an embodiment of the present disclosure.
FIG. 2 is a schematic structural diagram of a heat exchange tube according to another embodiment of the present disclosure.
FIG. 3 is a schematic structural diagram of a heat exchange tube according to still another embodiment of the present disclosure.
FIG. 4 is a schematic structural diagram of a heat exchange tube according to further still another embodiment of the present disclosure.
FIG. 5 is a schematic structural diagram of a heat exchange tube for heat exchanger according to an embodiment of the present disclosure.
FIG. 6 is a perspective view of the heat exchange tube for heat exchanger of FIG. 5.
FIG. 7 is a schematic structural diagram of a heat exchange tube for heat exchanger according to another embodiment of the present disclosure.
FIG. 8 is a perspective view of the heat exchange tube for heat exchanger of FIG. 7.
FIG. 9 is a schematic structural diagram of a heat exchange tube for heat exchanger according to still another embodiment of the present disclosure.
FIG. 10 is a perspective view of the heat exchange tube for heat exchanger of FIG. 9.
FIG. 11 is a schematic structural diagram of a heat exchanger according to an embodiment of this present disclosure.

### Reference signs:

1- first layer; 2 - second layer; 3 - third layer; 4 - core layer; 5 - heat exchange channel; 6 - first piece; 7 - first tube; 8 - second tube; 9 - heat exchange tube; 10 - fin.

### DETAILED DESCRIPTION OF EMBODIMENTS

Embodiments of the present disclosure are described in detail below, examples of which are illustrated in the accompanying drawings. The embodiments described below with reference to the accompanying drawings are exemplary and are intended to explain the present disclosure, and cannot be construed as limitation to the present disclosure. In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate the orientation or positional relationship based on the orientation or positional relationship shown in the drawings, are merely for the convenience of describing the present disclosure and simplifying the description, and do not indicate or imply that the device or the meta-clamp referred to must have a specific orientation, be constructed and operated in a specific orientation, and therefore cannot be understood as a limitation to the present disclosure.

In the present disclosure, corrosion resistance refers to comprehensive corrosion resistance and pitting corrosion resistance of an aluminum alloy in a corrosive environment. The comprehensive corrosion resistance refers to durability for comprehensive corrosion of the aluminum alloy, and the pitting corrosion resistance refers to durability for pitting corrosion of the aluminum alloy. The corrosive environment includes atmospheric and/or water environments, such as an acidic environment, an alkaline environment, a chloride environment, or combination thereof.

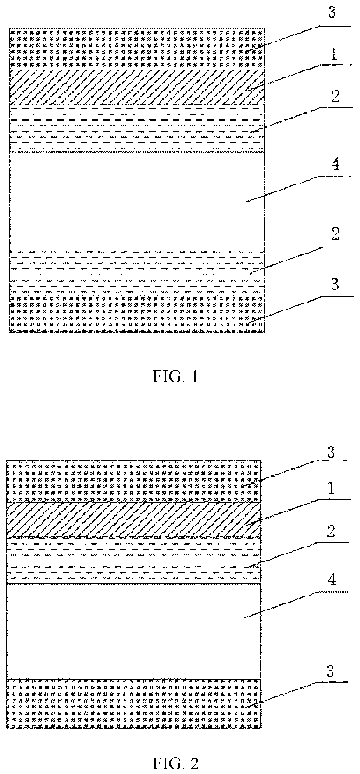

As shown in FIGS. 1 to 4, an embodiment of the present disclosure provides a heat exchange tube for heat exchanger, where a material of the heat exchange tube is a multi-layer structural composite aluminum alloy material, including a core layer 4, a first layer 1, and a second layer 2. A material of core layer 4 is industrial pure aluminum or aluminum alloy. A materials of first layer 1 and a material of second layer 2 are aluminum alloy. Core layer 4 includes a first side and a second side in a thickness direction thereof. The thickness direction of core layer 4 is in an up-down direction, and core layer 4 includes an upper side and a lower side that are arranged opposite to each other in the up-down direction.

First layer 1 and second layer 2 are arranged outside the first side. In other words, first layer 1 and second layer 2 can be arranged only outside the first side of core layer 4, or first layer 1 and second layer 2 can be arranged outside both the first side and the second side of core layer 4. At the same time, the following situations can be also included: first layer 1 and second layer 2 are arranged outside the first side, and only first layer 1 or second layer 2, or no layer, is arranged outside the second side.

A thickness direction of first layer 1, a thickness direction of second layer 2, and a thickness direction of core layer 4 are substantially parallel to each other. First layer 1 and second layer 2 are arranged at the same side of core layer 4, and second layer 2 is closer to core layer 4 than first layer 1. In other words, core layer 4, second layer 2 and first layer 1 are arranged in sequence, and core layer 4 is in contact with second layer 2, and second layer 2 is in contact with first layer 1.

As shown in FIG. 1, a thickness direction of core layer 4, a thickness direction of first layer 1, and a thickness direction of second layer 2 are all in up-down direction. Second layer 2 includes an upper side and a lower side opposite to each other in the up-down direction. Second layer 2 is arranged on the upper side of core layer 4, that is, the lower side of second layer 2 is connected with the upper side of core layer 4, and the upper side of second layer 2 is arranged with first layer 1.

First layer 1 is a protective layer configured to form a low-potential protective layer on material surface, to prevent deterioration of corrosion resistance of the material caused by local enrichment of Cu and Mg elements.

Second layer 2 is a barrier layer, which is an Al-Mn alloy layer with good intercrystalline corrosion resistance particularly specified by elements such as Si, Fe and Cu, and is configured to obstruct material strengthening elements Cu and Mg in core layer 4 from directly diffusing and migrating to outer layer, and to obstruct Si element in outer layer from diffusing to core layer 4.

Corrosion potential of first layer 1 is less than corrosion potential of second layer 2, and corrosion potential of second layer 2 is less than corrosion potential of core layer 4. The core material is an Al-Mn alloy containing Cu, and has the highest corrosion potential in multilayer materials. In other words, the corrosion potentials of the core material, second layer 2, and first layer 1 are arranged from high to low.

The heat exchange tube further includes a third layer 3. One or two or more layers of first layer 1, second layer 2, and third layer 3 are arranged outside the second side of core layer 4. When there are two or more layers arranged outside the second side, the layer away from core layer 4 in the thickness direction has a lower corrosion potential than the layer close to core layer 4 in the thickness direction. In other words, the lower side of core layer 4 can be arranged only with first layer 1, or only with second layer 2, or only with third layer 3, or with first layer 1 and second layer 2, or with first layer 1 and third layer 3, or with second layer 2 and third layer 3, or with first layer 1, second layer 2 and third layer 3. When two layers are arranged, third layer 3 is arranged outside first layer 1 or second layer 2, or first layer 1 is arranged outside second layer 2. When three layers are arranged, second layer 2, first layer 1 and third layer 3 are sequentially arranged outward from core layer 4, and thus third layer 3 is located as the outermost layer. Corrosion potential of third layer 3 is smaller than corrosion potential of first layer 1, and the corrosion potentials of the core material, second layer 2, first layer 1, and third layer 3 are arranged from high to low. Further, third layer 3 can be arranged outside the first side. When there is third layer 3 arranged outside the first side, second layer 2, first layer 1, and third layer 3 are arranged from inside to outside, and thus third layer 3 is located as the outermost layer.

Further, third layer 3 can be arranged on one of the upper and lower sides of core layer 4, or can be arranged on both the upper and lower sides of core layer 4. When there are third layers 3 arranged on both the upper and lower sides of core layer 4, the third layers 3 are both located as the outermost layers thereof.

Third layer 3 is a solder layer. The heat exchange tube for heat exchanger according to an embodiment of the present disclosure is braze-welded with other components of the heat exchanger via third layer 3.

It can be understood that the combination of core layer 4, first layer 1, second layer 2, and third layer 3 includes but is not limited to the several types mentioned above.

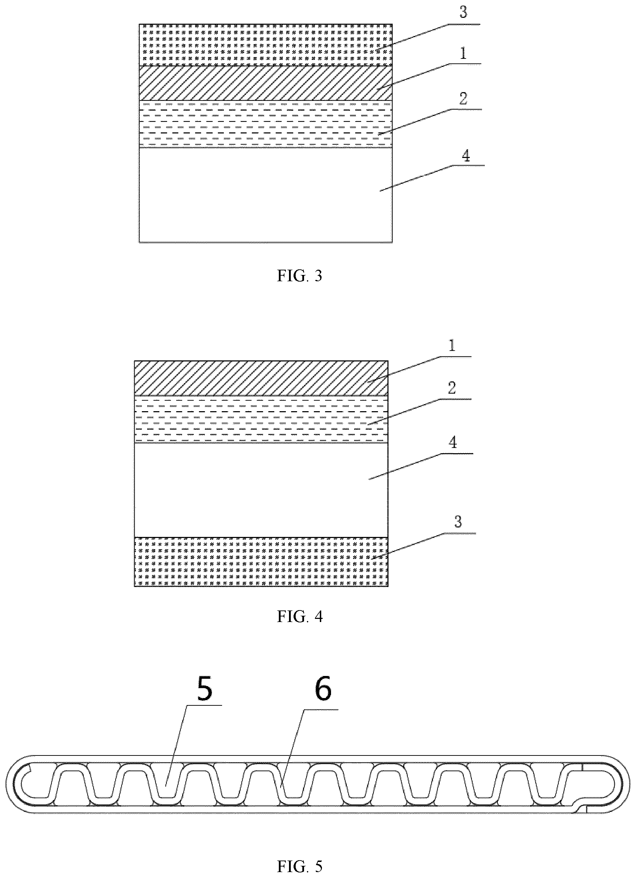

The combination of core layer 4, first layer 1, second layer 2 and third layer 3 is exemplified as below:
(1) As shown in FIG. 1, second layer 2 is arranged with two layers, first layer 1 is arranged with one layer, and third layer 3 is arranged with two layers. Thus, there are second layer 2, first layer 1 and third layer 3 arranged in sequence from inside to outside at the upper side of core layer 4, and second layer 2 and third layer 3 arranged in sequence from inside to outside at the lower side of core layer 4.
(2) As shown in FIG. 2, first layer 1 and second layer 2 are each arranged with one layer, and third layer 3 is arranged with two layers. Thus, there are second layer 2, first layer 1 and third layer 3 arranged in sequence from inside to outside at the upper side of core layer 4, and third layer 3 arranged at the lower side of core layer 4.
(3) As shown in FIG. 3, second layer 2, first layer 1 and third layer 3 are each arranged with one layer, and there are second layer 2, first layer 1 and third layer 3 arranged in sequence from inside to outside at the upper side of core layer 4. There is third layer 3 at the outer surface side, facing the environment, of the heat exchange tube made of this heat exchange tube material, and no third layer 3 at the inner layer of the tube. This heat exchange tube is used for water flow, and the inner side of the tube does not contact the air, so that corrosion does not occur.
(4) As shown in FIG. 4, second layer 2, first layer 1 and third layer 3 are each arranged with one layer, and there are second layer 2 and first layer 1 arranged in sequence from inside to outside at the upper side of core layer 4, and third layer 3 arranged at the lower side of core layer 4. There is no third layer 3 at the outer surface side, facing the environment, of the heat exchange tube made of this heat exchange tube material, and one third layer 3 at the inner layer of the tube. The heat exchange tube is used for a tube with a lap joint structure. The heat exchanger is matched with a composite fin with a solder layer for usage.

The materials of core layer 4, first layer 1, second layer 2 and third layer 3 have different composition contents, and the specific composition contents are shown in Table 1, where √ represents contained, and / represents non-contained.

**Table 1**

| | | | | | | | | | | | | |
|---|---|---|---|---|---|---|---|---|---|---|---|---|
| Character | Layer | Si | Fe | Cu | Mn | Zn | Ti | Zr | Mg | Al | impurity elements | unit (%) |
| B1 | solder layer | 2-14 | ≤0.3 | <0.1 | <0.3 | ≤3 | ≤0.2 | / | / | √ | ≤0.15 | |
| L1 | protective layer | ≤0.8 | ≤0.6 | ≤0.1 | ≤2 | 0.5-3 | ≤0.25 | ≤0.3 | / | √ | ≤0.15 | |
| L2 | barrier layer | ≤0.3, preferably ≤0.1 | ≤0.3 | ≤0.1 | 0.5-2 | ≤1 | ≤0.25 | ≤0.3 | / | √ | ≤0.15 | |
| C1-1 | core material alloy layer-1 | ≤0.3 | ≤0.3 | 0.15-1 | 0.5-2 | | ≤0.25 | | ≤0.5 | √ | ≤0.15 | |
| C1-2 | core material alloy layer-2 | ≤0.3 | ≤0.3 | 0.15-1 | 0.5-2 | | | ≤0.3 | ≤0.5 | √ | ≤0.15 | |

Core layer 4 includes two types, by mass percentage, one is: Si: 0%-0.3%, Fe: 0%-0.3%, Cu: 0.15%-1.0%, Mn: 0.5%-2.0%, Mg: 0%-0.5%, and Ti: 0%-0.25%, and a remainder of Al and inevitable impurity elements, in which single element content in the inevitable impurity elements is less than or equal to 0.05%, and total content of the inevitable impurity elements is less than or equal to 0.15%, i.e., the C1-1 layer in Table 1; the other one is: Si: 0%-0.3%, Fe: 0%-0.3%, Cu: 0.15%-1.0%, Mn: 0.5%-2.0%, Mg: 0%-0.5%, and Zr: 0%-0.3%, and a remainder of Al and inevitable impurity elements, in which single element content in the inevitable impurity elements is less than or equal to 0.05%, and total content of the inevitable impurity elements is less than or equal to 0.15%, i.e., the C1-2 layer in Table 1. The key Cu element is an alloy element causing corrosion potential of the aluminum alloy to shift positively , and the introduction of the Cu element causes core layer 4 to become a protected cathode layer, with the highest potential difference with respect to other layers. Meanwhile, the Cu element has a relatively low balance solid solubility in the aluminum alloy. An excessive Cu content in the aluminum alloy is prone to segregate at the grain boundary to form Al₂Cu, and the material is prone to undergo intercrystalline corrosion. Therefore, the Cu content should be limited not to exceed 1% by weight.

Second layer 2 includes, by mass percentage: Si: 0%-0.3%, Fe: 0%-0.3%, Cu: 0%-0.1%, Mn: 0.5%-2.0%, Zn: 0%-1.0%, Ti: 0%-0.25%, and Zr: 0%-0.3%, and a remainder of Al and inevitable impurity elements, in which single element content in the inevitable impurity elements is less than or equal to 0.05%, and total content of the inevitable impurity elements is less than or equal to 0.15%. In order to improve mechanical properties of the alloy, second layer 2 contains no more than 2% weight of Mn element composition, and has a thickness of 5%-50% of material thickness of the heat exchange tube. Second layer 2 should have sufficient thickness, so as to play a role, during welding process, in obstructing Si element in outer layer from diffusing to core layer 4 which deteriorates corrosion resistance of the core layer alloy, and in obstructing the elements, such as Cu, Mg, and the like, in the core layer alloy from diffusing to outer layer which affects welding performance and corrosion resistance of the outer layer. Thus, after welding, in outer layer, the Cu element content is limited by less than 0.2% by mass percentage, and the Mg element content is limited by less than 0.1% mass percentage, and in core layer, the Si element content is limited by less than 0.4% mass, so as to ensure corrosion resistance of the multilayer composite material.

In some embodiments, the mass percentage of Si in second layer 2 is preferably less than 0.1% in consideration of influence of accelerating corrosion by diffusion of the Si element.

First layer 1 includes, by mass percentage: Si: 0%-0.8%, Fe: 0%-0.6%, Cu: 0%-0.1%, Mn: 0%-2.0%, Zn: 0.5%-3.0%, Ti: 0%-0.25%, and Zr: 0%-0.3%, and a remainder of Al and inevitable impurity elements, in which single element content in the inevitable impurity elements is less than or equal to 0.05%, and total content of the inevitable impurity elements is less than or equal to 0.15%. In order to improve mechanical properties of the alloy, first layer 1 contains no more than 2% weight of Mn element composition. The key Zn element is an alloy element capable of causing corrosion potential of the aluminum alloy material to shift negatively. The introduction of Zn can form a low corrosion potential band relative to the core material, namely a sacrificial anode layer, which can, as a sacrificial anode, protect the core material when corrosion occurs. However, for avoiding the first layer, as the tube material, from too fast corrosion, the Zn content thereof should not exceed 3% by weight, and the thickness thereof accounts for 5%-30% of material thickness of the heat exchange tube. Therefore, it should be satisfied that, after welding treatment of the material, a corrosion protective layer with a low corrosion potential as an outer layer material is formed, and a thickness required by a corrosion potential gradient gradually increasing towards the inner layer is formed.

Third layer 3 includes, by mass percentage: Si: 2%-14%, Fe: 0%-0.3%, Cu: less than 0.1%, Mn: less than 0.3%, Zn: 0%-3.0%, and Ti: 0%-0.2%, and a remainder of Al and inevitable impurity elements, in which single element content in the inevitable impurity elements is less than or equal to 0.05%, and total content of the inevitable impurity elements is less than or equal to 0.15%. Third layer 3 is an Al-Si type aluminum alloy with a low melting point for braze-welding. Third layer 3 melts at a high temperature and solidifies after cooling, so as to involves a welding effect. Third layer 3 has a thickness of 5%-20% of material thickness of the heat exchange tube, which should satisfies requirement of the solder for welding and filling the tubes and the fins, and avoid an excessive proportion thereof which cause problems of tube fusion by the solder and material strength reduction. A welding temperature of alloy of this layer should be within a range between 580°C and 610°C.

A transverse sectional structure of the multilayer alloy sheet are shown in FIGS. 1 to 4, where specific combined layer number can be adjusted depending on specific application of the heat exchange tube. Since the heat exchange tube is prone to corrosion on the side facing an air environment, there are first layer and a second layer arranged at surface of the heat exchange tube facing an external environment. Generally, during braze-welding process of the heat exchanger, the heat exchange tube adopts a multilayer composite aluminum alloy material, having the third layer containing high-content Si on surface. The third layer serves as a solder to form welding seam, meanwhile Si element diffuses inward the core layer while, and the strengthening elements Cu, Mg and the like of the core material inside diffuse to surface of the heat exchange tube to form a gradient element diffusion and precipitation band. In the present disclosure, a potential gradient formed by element diffusion is reasonably designed and utilized, so as to obtain excellent corrosion resistance aluminum alloy composite material.

A manufacturing method of the aluminum alloy material adopts an existing typical production method, such as casting, hot rolling, and cold rolling, that is, obtaining an alloy ingot or sheet material through direct chill casting (DC) or continuous casting (CC), homogenizing a core material ingot, removing surface oxide layer of the ingot by milling, stacking a composite bonding aluminum alloy plate and a core material according to an alloy combination proportion and an alloy sequence, forming a hot rolled coil blank by heating and hot rolling, and cold rolling and performing a final stress relief annealing process.

In order to make purposes, technical solutions, and advantages of embodiments of the present disclosure clearer, the technical solutions of the embodiments of the present disclosure will be described clearly and completely below.

### Examples 1 to 20 and Comparative Examples 1 to 2

Chemical components of the core layer and each layer of alloy obtained by smelting and casting are shown in Table 2, in which C1-C3 are alloy of the core material, L11-L13 are alloy of the first layer, L21-L22 are alloy of the second layer, and alloy of the third layer can select a conventional Al-XSi alloy, where X refers to mass percentage of a main alloy element with the highest content in the alloy except to Al element. For example, Al-7Si, means that content of Si element is about 7% by mass percentage. Alloy of the third layers selected in the examples and comparative examples of the present disclosure is Al-7Si alloy, Al-7Si alloy added 1.5% Zn by mass percentage, Al-5Si, or Al-5Si alloy added 3% Zn by mass percentage.

**Table 2.**

| layers | material number | chemical composition (mass%), with a remainder of Al and inevitable impurity elements, and the non-contained component is represented by -. | | | | | | | |
|---|---|---|---|---|---|---|---|---|---|
| | | Si | Fe | Cu | Mn | Mg | Zn | Zr | Ti |
| third layer | Al-7Si | 7.5 | 0.17 | - | - | - | - | - | - |
| | Al-7Si-1.5%Zn | 7.5 | 0.17 | - | - | - | 1.5 | - | - |
| | Al-5Si | 5.0 | 0.15 | - | - | - | - | - | - |
| | Al-5Si-3%Zn | 5.0 | 0.15 | - | - | - | 3.0 | - | - |
| first layer | L11 | 0.3 | 0.2 | - | 1.5 | - | 1.5 | 0.15 | - |
| | L12 | 0.2 | 0.3 | - | 1.8 | - | 1.0 | 0.12 | - |
| | L13 | 0.2 | 0.2 | - | 1.0 | - | 2.5 | - | 0.15 |
| second layer | L21 | 0.2 | 0.2 | - | 1.5 | - | - | 0.12 | - |
| | L22 | 0.01 | 0.2 | - | 1.5 | - | - | 0.15 | - |
| core layer | C1 | 0.05 | 0.1 | 0.5 | 1.5 | - | - | - | - |
| | C2 | 0.05 | 0.2 | 0.3 | 1.2 | 0.15 | - | - | 0.12 |
| | C3 | 0.05 | 0.2 | 0.9 | 1.2 | - | - | - | - |

A corrosion potential is tested by an SCE saturated calomel reference electrode according to ASTM G69. A braze-welded aluminum plate was ultrasonic cleaned with absolute ethyl alcohol and dried before testing. A treatment method for measuring aluminum alloy plate in different depths included: corroding the aluminum alloy plate until approaching target thickness range by a 1-2 mol/L NaOH solution, and polishing to target thickness by P800 aluminum oxide or silicon dioxide abrasive paper.

Examples 1 to 20 were conducted by configuring different alloy layers for heat exchange tubes and adopting different chemical compositions for each the alloy layers. The heat exchange tube without the first layer and the second layer were used as Comparative Examples 1 and 2. Corrosion performance evaluations were compared among Examples, and among Examples and Comparative Examples. In Examples and Comparative Examples, only one side of the core layer needed to be arranged with alloy layers. Chemical compositions of core layer 4, first layer 1, second layer 2, and third layer 3 in Examples and Comparative Examples corresponded to chemical compositions identified by material numbers in Table 2.

Method for the corrosion resistance evaluation: an aluminum plate were sealed for a surface closed to the core material and an edge by plating glue and further sealed by 3M electrical glue before testing, and obliquely and alternately placed with an angle of 15 degrees with respect to vertical direction. Each groups with 3-5 parallel samples were tested for 21 days, 42 days and 50 days, respectively. If a parallel sample group had one aluminum plate corroded and penetrated, it would be determined to be unqualified and represented by X, and if no one was corroded and penetrated, it would be determined to be qualified and represented by O. Test evaluation results are shown in Table 3, where "-" represents defects and not contained. The corrosion potential measurement results are shown in Table 3. The multilayer structure aluminum plate according to the present disclosure meets the potential gradient configuration.

**Table 3**

| number | third layer/ratio 10% | first layer/ratio | second layer/ratio | core layer | outer layer potential mV | interme diate layer potential mV | Core Layer potential mV | SW AAT 21d | SWA AT 42d | SWAA T 50d |
|---|---|---|---|---|---|---|---|---|---|---|
| Example 1 | Al-7Si | L11/15% | L21/15% | C1 | -768 | -726 | -675 | O | O | O |
| Example 2 | Al-5Si | L11/5% | L21/15% | C1 | -758 | -722 | -672 | O | O | X |
| Example 3 | Al-7Si | L12/15% | L22/10% | C1 | -752 | -730 | -672 | O | O | O |
| Example 4 | Al-5Si | L12/10% | L22/10% | C1 | -752 | -730 | -672 | O | O | O |
| Example 5 | Al-5Si | L12/10% | - | C1 | -755 | - | -680 | 0 | 0 | X |
| Example 6 | Al-7Si | - | L21/15% | C1 | -720 | -706 | -675 | 0 | X | X |
| Example 7 | Al-5Si | - | L22/10% | C1 | -716 | -702 | -675 | O | X | X |
| Example 8 | Al-7Si - 1.5%Zn | - | L21/15% | C1 | -772 | -726 | -675 | O | O | X |
| Example 9 | Al-5Si - 3%Zn | - | L22/15% | C1 | -834 | -740 | -675 | O | O | X |
| Example 10 | Al-5Si - 3%Zn | L11/10% | L22/10% | C2 | -842 | -730 | -680 | O | O | O |
| Example 11 | Al-7Si | L11/5% | L21/15% | C2 | -760 | -720 | -680 | O | O | X |
| Example 12 | Al-7Si | L12/10% | L22/10% | C2 | -765 | -728 | -678 | O | O | O |
| Example 13 | Al-7Si | L12/10% | - | C2 | -765 | | -686 | O | O | X |
| Example 14 | Al-7Si | - | L22/10% | C2 | -710 | -702 | -678 | O | X | X |
| Example 15 | Al-7Si - 1.5%Zn | - | L21/15% | C2 | -772 | -728 | -680 | O | O | X |
| Example 16 | Al-7Si - 1.5%Zn | L12/10% | L22/10% | C2 | -786 | -735 | -680 | 0 | 0 | 0 |
| Example 17 | Al-7Si | L11/15% | - | C3 | -765 | - | -665 | O | X | X |
| Example 18 | Al-5Si | L13/15% | - | C3 | -805 | - | -670 | O | O | X |
| Example 19 | Al-5Si - 3%Zn | - | L22/15% | C3 | -835 | -742 | -665 | O | O | X |
| Example 20 | - | L13/10% | L22/15% | C3 | -842 | -740 | -665 | O | O | O |
| Comparative Example 1 | Al-7Si | - | - | AA3003 | -695 | - | -690 | X | X | X |
| Comparative Example 2 | Al-7Si - 1.5%Zn | - | - | AA3003 | -772 | - | -690 | X | X | X |

Example 1 is taken as an example for explanation. The chemical compositions of core layer 4, first layer 1, second layer 2, and third layer 3 in Example 1 corresponded to chemical compositions corresponding to identified by material numbers in Table 2. The thickness of first layer 1 accounted for 15% of material thickness of the heat exchange tube, the thickness of second layer 2 accounted for 15% of material thickness of the heat exchange tube, and the thickness of third layer 3 accounted for 10% of material thickness of the heat exchange tube. The outer layer potential represented a potential of third layer 3 and first layer 1, which was -768 mV. The intermediate layer potential represented potential of second layer 2, which was -726 mV. Core layer 4 has a potential of -675 mV. "SWAAT 21d" represented a test result after 21 days, which was qualified. "SWAAT 42d" represented a test result 42 days, which was qualified. "SWAAT 50d" represented a test result after 50 days, which was qualified.

Example 6 is taken as an example for explanation. Example 6 differed from Example 1 in that no first layer 1 was arranged. The outer layer potential was -720 mV, the intermediate layer potential was -706 mV, and core layer 4 potential was -675 mV. A testing result after 21 days was qualified, while testing results after 42 days and 50 days were unqualified, which attributed to no first layer 1 arranged.

Both of Comparative Examples 1 and 2 used conventional heat exchange tube. No first layer 1 or second layer 2 were arranged. Core layer 4 adopted AA3003 aluminum alloy in the prior art. A testing results after 21 days, 42 days and 50 days were all unqualified, which mainly attributed to no first layer 1 or second layer 2 were arranged.

It can be seen from Table 3 that the corrosion resistance of the heat exchange tube according to Examples of the present disclosure is superior in whole to that of the existing common tube alloy. During the welding, element diffusion occurs in the heat exchange tube of Examples of the disclosure. Single-layer corrosion potentials of the multi-layer material also vary in gradient. The aluminum alloy heat exchange tube with excellent corrosion performance can be obtained by designing and adjusting corrosion potential gradient from the outer layer to the inner layer. The low corrosion potential layer of outer layer is preferentially corroded to protect the material of core layer 4 from rapid corrosion, thereby protecting the heat exchange tube from corrosion penetration.

The heat exchange tube in the present disclosure is made by the above heat exchange tube material. The heat exchange tube is a microchannel flat tube, and is shaped by folding Al-Si type aluminum alloy plate made of the above heat exchange tube material. The microchannel flat tube shaped after folding is formed with a plurality of heat exchange channels 5 and a plurality of first pieces 6. The plurality of heat exchange channels 5 are arranged at intervals in width direction of the microchannel flat tube, and extend in length direction of the microchannel flat tube. Each of the first pieces 6 is arranged between two adjacent heat exchange channels 6 in width direction of the microchannel flat tube.

In some embodiments, the heat exchange tube is a microchannel flat tube. The microchannel flat tube includes a plurality of heat exchange channels and a plurality of first pieces. The plurality of heat exchange channels are arranged at intervals in width direction of the microchannel flat tube, and extend in length direction of the microchannel flat tube. Each of the first pieces is arranged between two adjacent heat exchange channels in width direction of the microchannel flat tube. The heat exchange tube has a width W and a channel quantity N, which satisfy: 0.1<((N-2)/20)² ((W-16)/16)³ <0.25. The heat exchange tube with a structure satisfying this condition is beneficial to improving pressure resistance of the heat exchange tube.

The heat exchange tube made by the above heat exchange tube material in the Examples of the present disclosure will be clearly and completely described as following.

### Example 21

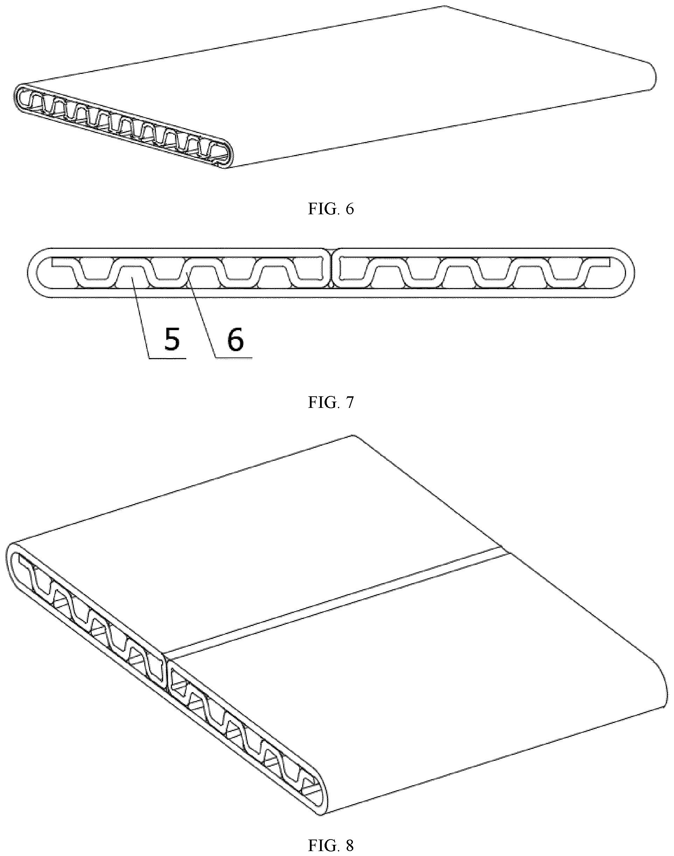

This heat exchange tube included a tube wall shaped by bending a single material strip, and a fin integrally extended from interior of the tube wall and had a wave-shaped structure. As shown in FIGS. 5 and 6, first piece 6 was arranged between adjacent a wave peak and a wave trough of the wave-shaped fins, and first piece 6 was located between two adjacent heat exchange channels 5 in the width direction of the microchannel flat tube.

### Example 22

Example 22 was implemented as Example 21 excepting that: the microchannel flat tube was symmetrically arranged in the width direction. As shown in FIGS. 7 and 8, first piece 6 was arranged between adjacent a wave peak and a wave trough of the wave-shaped fins, and each first piece 6 was located between two adjacent heat exchange channels 5 in the width direction of the microchannel flat tube.

### Example 23

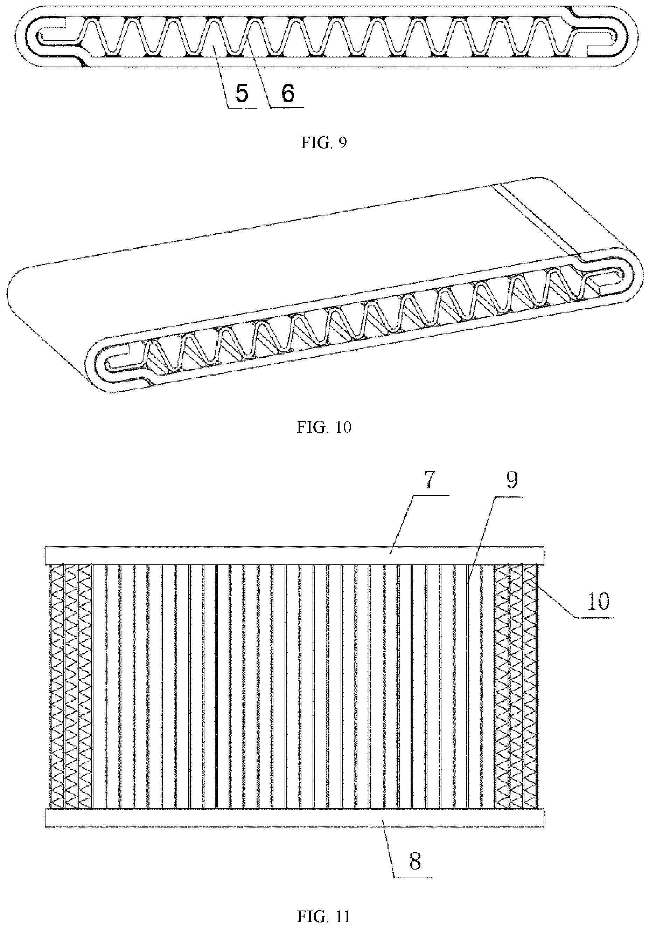

Example 23 was implemented as Example 21 excepting that: this heat exchange tube included an upper tube wall and a lower tube wall shaped by bending two material strips with the same shape, and an inner insert shaped by folding one material strip into a wave-shaped structure. The two material strips shaping the tube wall were arranged opposite to each other. In the material strips, one formed a larger arc at longitudinal edge, and the other one formed a smaller arc at longitudinal edge. Due to such opposite arrangement, the larger arc of the one material strip was engaged around the smaller arc of the other one material strip, to form a narrow edge of the flat tube. The inner insert was inserted into inner space formed by the tube wall to form a microchannel flat tube. Left and right longitudinal edges of the inner insert abutted against left and right narrow edges of the flat tube and provided an additional reinforcement to the narrow edges. As shown in FIGS. 9 and 10, in wave-shaped structure shaped by the inner insert, first piece 6 was arranged between adjacent a wave peak and a wave trough of the wave-shaped fins, and each first piece 6 was located between two adjacent heat exchange channels 5 in the width direction of the microchannel flat tube.

The heat exchange tube made by the above heat exchange tube material is not limited to the shape of the Examples.

Another aspect of the embodiments of the present disclosure further provides a heat exchanger, as shown in FIG. 11, including first tube 7, second tube 8, heat exchange tubes 9 for heat exchanger according to the Examples of the present disclosure, and fin 10. The heat exchange tubes 9 are directly or indirectly connected with the first tube 7, and the heat exchange tubes 9 are directly or indirectly connected with the second tube 8. At least part of the fin is arranged between two adjacent heat exchange tubes in length direction of first tube 7, and fin 10 is connected with the two adjacent heat exchange tubes 9.

In some embodiments, the heat exchange tube 9 is connected to the fins 10 by braze-welding.

In some embodiments, the heat exchange tube 9 is a flat tube.

In some embodiments, tube body of the heat exchange tube 9 and a plurality of the first pieces are integrally folded by one sheet material.

According to the heat exchanger of the Examples of the disclosure, the above heat exchange tube is adopted, so that the heat exchanger is corrosion-resistant, and has long service life.

In the description of the present specification, reference to the terms "an embodiment", "some embodiments", "an example", "a specific example", "some examples", or the like means that a specific feature, structure, material, or characteristic described in connection with the embodiments or examples is included in at least one embodiment or example of the present disclosure. In the specification, the schematic description of the above-described terms is not necessary to refer to the same embodiment or example. In addition, the described specific features, structures, materials, or characteristics described can be combined in an appropriate way in any one or more embodiments or examples. In addition, those skilled in the art may combine and associate different embodiments or examples described in this specification and features of different embodiments or examples, without conflicting with each other.

Although embodiments of the present disclosure have been shown and described above, it can be understood that the above embodiments are exemplary and cannot be understood as limiting the present disclosure, and those skilled in the art can make variations, modifications, substitutions and variations on the above embodiments within the scope of the present disclosure.

## Claims

1. A heat exchange tube for heat exchanger, comprising a core layer, a first layer, and a second layer, wherein a material of the core layer is industrial pure aluminum or aluminum alloy, and a material of the first layer and a material of the second layer are aluminum alloy, wherein the core layer comprises a first side and a second side in a thickness direction thereof, the first layer and the second layer are arranged outside the first side, a thickness direction of the first layer, a thickness direction of the second layer, and a thickness direction of the core layer are substantially parallel to each other, wherein the first layer and the second layer are arranged at the same side of the core layer, and the second layer is closer to the core layer than the first layer, and wherein corrosion potential of the first layer is less than a corrosion potential of the second layer, and the corrosion potential of the second layer is less than a corrosion potential of the core layer.

2. The heat exchange tube for a heat exchanger according to claim 1, wherein the heat exchange tube further comprises a third layer, wherein one or two or more layers of the first layer, the second layer, and the third layer are arranged outside the second side of the core layer, and when there are two or more layers arranged outside the second side, the layer away from the core layer in the thickness direction has a lower corrosion potential than the layer close to the core layer in the thickness direction.

3. The heat exchange tube for heat exchanger according to claim 1, wherein the core layer comprises, by mass percentage, Si: 0%-0.3%, Fe: 0%-0.3%, Cu: 0.15%-1.0%, Mn: 0.5%-2.0%, Mg: 0%-0.5%, and one of 0%-0.3% Zr and 0%-0.25% Ti, and a remainder of Al and inevitable impurity elements.

4. The heat exchange tube for heat exchanger according to claim 1, wherein the second layer comprises, by mass percentage, Si: 0%-0.3%, Fe: 0%-0.3%, Cu: 0%-0.1%, Mn: 0.5%-2.0%, Zn: 0%-1.0%, Ti: 0%-0.25%, and Zr: 0%-0.3%, and a remainder of Al and inevitable impurity elements.

5. The heat exchange tube for heat exchanger according to claim 4, wherein Si in the second layer accounts for, by mass percentage, less than 0.1%.

6. The heat exchange tube for heat exchanger according to claim 1, wherein the first layer comprises, by mass percentage, Si: 0%-0.8%, Fe: 0%-0.6%, Cu: 0%-0.1%, Mn: 0%-2.0%, Zn: 0.5%-3.0%, Ti: 0%-0.25%, and Zr: 0%-0.3%, and a remainder of Al and inevitable impurity elements.

7. The heat exchange tube for heat exchanger according to claim 2, wherein the third layer comprises, by mass percentage: Si: 2%-14%, Fe: 0%-0.3%, Cu: less than 0.1%, Mn: less than 0.3%, Zn: 0%-3.0%, and Ti: 0%-0.2%, and a remainder of Al and inevitable impurity elements.

8. The heat exchange tube for heat exchanger according to claim 2, wherein the heat exchange tube has at least one of the following features A, B and C:
A, a thickness of the third layer accounts for 5% -20% of material thickness of the heat exchange tube,
B, a thickness of the first layer accounts for 5% -30% of material thickness of the heat exchange tube, and
C, a thickness of the second layer accounts for 5% -50% of material thickness of the heat exchange tube.

9. The heat exchange tube for heat exchanger according to any one of claims 1 to 8, wherein the heat exchange tube is a microchannel flat tube, the microchannel flat tube comprises a plurality of heat exchange channels and a plurality of first pieces, the plurality of heat exchange channels are arranged at intervals in width direction of the microchannel flat tube and extend in length direction of the microchannel flat tube, the first piece is arranged between two adjacent heat exchange channels in width direction of the microchannel flat tube, and the heat exchange tube has a width W and a channel quantity N, which satisfy: 0.1<((N-2)/20)² ((W-16)/16)³ <0.25.

10. A heat exchanger, comprising a first tube, a second tube, multiple heat exchange tubes for heat exchanger according to any one of claims 1-9, and a fin, wherein the heat exchange tubes are directly or indirectly connected with the first tube, the heat exchange tubes are directly or indirectly connected with the second tube, at least part of the fin is arranged between two adjacent heat exchange tubes in length direction of the first tube, and the fin is connected with the two adjacent heat exchange tubes.
